# EUROPÄISCHE PATENTSCHRIFT

(11) **EP 3 299 192 B1**
(45) Veröffentlichungstag und Bekanntmachung des Hinweises auf die Patenterteilung: **01.05.2019**
(21) Anmeldenummer: 17187173.4
(22) Anmeldetag: 22.08.2017
(51) Int. Cl.: B60D 1/30, B60T 7/20, B60T 13/08

(54) **ZUSATZBREMSEINRICHTUNG FÜR EINEN FAHRZEUGANHÄNGER MIT AUFLAUFBREMSE**
ADDITIONAL BRAKE DEVICE FOR A TRAILER WITH AN INERTIA BRAKE SYSTEM
DISPOSITIF DE FREIN ADDITIONNEL POUR UNE REMORQUE DE VÉHICULE POURVUE D'UN SYSTÈME DE FREINAGE PAR INERTIE

(30) Priorität: 25.08.2016 DE 202016104675 U
(43) Veröffentlichungstag der Anmeldung: 28.03.2018
(73) Patentinhaber: BPW Fahrzeugtechnik GmbH & Co. KG, 33104 Paderborn (DE); Reich GmbH Regel- und Sicherheitstechnik, 35713 Eschenburg-Wissenbach (DE)
(72) Erfinder: ALTAJEV, Maxim, 33161 Hövelhof (DE); BRÜNTRUP, Andreas, 33098 Paderborn (DE); HEIDRICH, Philipp, 32657 Lemgo (DE); THEISS, MarcAndré, 35687 Dillenburg (DE); KNEIFEL, Jan Kevin, 35686 Dillenburg (DE); BENDER, Steffen, 35713 Eschenburg (DE); BEIJERSBERGEN VAN HENEGOUWEN, Cornelis, 5314 AP Bruchem (NL)
(74) Vertreter: Bungartz Christophersen Partnerschaft mbB Patentanwälte

(56) Entgegenhaltungen:
- EP-A1- 1 038 744
- EP-A2- 2 022 688
- DE-A1- 2 124 586
- DE-U1-202014 005 555
- DE-U1-202015 005 033

## Beschreibung

Die Erfindung betrifft eine Zusatzbremseinrichtung für einen auflaufgebremsten Fahrzeuganhänger, mit
- einem in der Deichsel des Fahrzeuganhängers längsbeweglichen Auflaufelement,
- einem an der Deichsel auf einer quer zu der Deichsel angeordneten Achse gelagerten Umlenkhebel, an dem ein zu den Radbremsen des Fahrzeuganhängers führender Bremszug befestigt ist, und gegen den das Auflaufelement arbeitet,
- einem in einem Gehäuse, welches an der Deichsel befestigt ist, angeordneten Antrieb, dessen Abtriebselement mit dem Umlenkhebel verbunden ist, wobei das Abtriebselement des Antriebs eine Drehwelle ist, die sich parallel zu der Achse des Umlenkhebels erstreckt.

Bei Fahrzeuganhängern, insbesondere solchen mit starrer Deichsel, wie dies z. B. bei Wohnwagenpritschenanhängern, Fahrzeugtransportern etc. der Fall ist, bestehen Probleme bei der Stabilisierung des Fahrzeugs im Schlingerfall. Daher werden derartige Fahrzeuganhänger oft mit einer sogenannten Schlingerbremse ausgerüstet. Diese umfasst eine Messeinrichtung zum Erkennen von Schlingerbewegungen des Fahrzeugs, und eine Stellvorrichtung mit einem Motor und einem durch den Motor bewegten Stellelement, welches mit dem zu den Fahrzeugbremsen führenden Bremsgestänge des Fahrzeuganhängers in Eingriff treten kann.

Aus der DE 102 15 617 A1 ist eine Schlingerbremse mit einem elektrischen Stellantrieb bekannt. Dieser ist an der Deichsel im Bereich der dortigen Auflaufeinrichtung angeordnet, und wirkt auf den Umlenkhebel der Auflaufeinrichtung ein.

Aus der DE 20 2006 010 199 U1 ist eine Schlingerbremse bekannt, deren elektrischer Antrieb weiter hinten angeordnet ist, nämlich im Bereich der die Fahrzeugräder lagernden Achse des Fahrzeuganhängers. Dazu sitzt der elektrische Antrieb auf einer Konsole, welche ihrerseits mit der Achse verschraubt ist. Die Ausgangswelle des Elektromotors ist mit einer Seiltrommel versehen, auf der ein Zugseil aufgewickelt ist. Das eine Ende des Zugseils ist mittels eines Klemmverbinders an dem zentralen Bremszug der Auflaufbremse befestigt.

Eine Zusatzbremseinrichtung mit den Merkmalen des Oberbegriffs des Patentanspruchs 1 ist aus der DE 20 2014 005 555 U1 bekannt. Auch diese weist einen an der Deichsel gelagerten Umlenkhebel auf, gegen den das in der Deichsel längsgeführte Auflaufelement arbeitet. In einem an der Deichsel befestigten Gehäuse befindet sich ein elektrischer Antrieb, dessen als eine Drehwelle ausgebildetes Abtriebselement mit dem Umlenkhebel verbunden ist. Diese Verbindung erfolgt über einen auf der Drehwelle angeordneten, exzenterförmigen Nocken und über einen an der Deichsel schwenkbar gelagerten Handbremshebel. Bei Betätigung des Antriebs übt der Nocken Druck gegen den Handbremshebel aus, wodurch dieser verschwenkt und seinerseits gegen den Umlenkhebel arbeitet.

Der Erfindung liegt die Aufgabe zugrunde, eine Zusatzbremseinrichtung für einen auflaufgebremsten Fahrzeuganhänger zu schaffen, die leicht montierbar und demontierbar ist, die im praktischen Einsatz, auch bei häufigeren Fahrten in staubhaltiger und feuchter Umgebung, anspruchslos und zuverlässig ist, und deren mechanische Komponenten für den Benutzer auf einfache Weise kontrollierbar sind.

Zur Lösung dieser Aufgabe wird eine Zusatzbremseinrichtung für einen auflaufgebremsten Fahrzeuganhänger mit den Merkmalen des Patentanspruchs 1 vorgeschlagen.

Eine solche Zusatzbremseinrichtung ist leicht montierbar und demontierbar und sie ist im praktischen Einsatz, selbst bei häufigen Fahrten in staubhaltiger und feuchter Umgebung, anspruchslos und zuverlässig. Zudem lassen sich die mechanischen Komponenten der Zusatzbremseinrichtung für den Benutzer auf einfache Weise kontrollieren, da sie vorne im Fahrzeug an der Deichsel angeordnet sind und hier eine unmittelbare Sichtkontrolle ermöglichen, ohne dass die Unterseite des Fahrzeugs inspiziert werden muss.

Vorteilhafte Ausgestaltungen der Zusatzbremseinrichtung sind in den Unteransprüchen angegeben.

So sieht eine vorteilhafte Ausgestaltung vor, dass der Umlenkhebel zweiarmig ausgebildet ist, und das Zugelement an demselben Arm befestigt ist, gegen den das Auflaufelement der Auflaufeinrichtung arbeitet. Diese Ausgestaltung ermöglicht die Anordnung des Gehäuses der Zusatzbremseinrichtung in Fahrtrichtung hinter dem Umlenkhebel und damit dort, wo ein ausreichender Bauraum zwischen den beiden Holmen der V-förmigen Deichsel vorhanden ist.

Zur Erzielung eines Getriebeeffekts ist es von Vorteil, wenn die beiden Arme des zweiarmigen Umlenkhebels von unterschiedlicher Länge sind, wobei der Abstand zwischen der Drehachse des Umlenkhebels und der Befestigung des Zugelements größer ist, und vorzugsweise das Zwei- bis Dreifache des Abstands zwischen dieser Drehachse und der Befestigung des Bremszugs beträgt.
(*Weiter mit Seite 3, ursprüngliche Fassung*)

Für eine einfache und zudem robuste, langlebige Abdichtung gegenüber dem Gehäuse der Zusatzbremseinrichtung ist von Vorteil, wenn das Gehäuse zum Hindurchführen der Drehwelle mit einer Gehäuseöffnung versehen ist und mindestens ein Dichtring zwischen der Drehwelle und der Gehäuseöffnung angeordnet ist.

Als Zugelement eignet sich zwar im Prinzip ein einfaches Seil. Jedoch ist für eine saubere Führung des Zugelements auch dann, wenn dieses nicht unter Zug steht, der Einsatz eines elastisch biegsamen Stabs als Zugelement sinnvoll. Dieses kann z. B. auch ein dünner Stab aus Fiberglas sein.

Gemäß einer weiteren Ausgestaltung der Erfindung ist das Zugelement derart mit dem Windenkörper verbunden, dass das Zugelement nur in Zugrichtung gegenüber dem Windenkörper arretiert ist, hingegen in Gegenrichtung frei beweglich gegenüber dem Windenkörper ist.

Jedoch kann auch eine Ausführungsform von Vorteil sein, bei der das Zugelement an dem Windenkörper durch Klemmen befestigt ist. Zum Beispiel kann an dem Windenkörper eine Klemmschelle befestigt sein, durch die ein Längsabschnitt des Zugelements hindurchgeführt ist. Diese Art der Befestigung ermöglicht ein Einstellen bzw. ein Verändern der wirksamen Länge des Zugelements, so dass die Bremswirkung der Zusatzbremseinrichtung einfach und genau justiert werden kann.

Die Umfangskontur des Windenkörpers kann, bezogen auf die Achse der Drehwelle, einen kreisförmigen bzw. kreisabschnittsförmigen Verlauf aufweisen.

Alternativ besteht die Möglichkeit, durch die Gestaltung der Umfangskontur des Windenkörpers eine bestimmte Kennlinie zu erzielen. Zu diesem Zweck wird mit einer Ausgestaltung vorgeschlagen, dass die Umfangskontur des Windenkörpers, bezogen auf die Achse der Drehwelle, einen exzentrischen Verlauf aufweist. Diese Exzentrizität kann zum Beispiel dergestalt sein, dass das Zugelement zu Beginn der Drehung des Windenkörpers einen größeren Weg bei geringer Zugkraft, und gegen Ende der Drehung einen geringeren Weg bei hoher Zugkraft zurücklegt.

Gemäß einer weiteren Ausgestaltung ist der Windenkörper mit einer in Umfangsrichtung verlaufenden Rille versehen. Die Rille bildet jene Umfangskontur, über die das Zugelement geführt ist.

Mit einer weiteren Ausgestaltung wird vorgeschlagen, dass das Gehäuse zu seiner Befestigung an der Deichsel mit einem Montageflansch versehen ist.

Mit einer weiteren Ausgestaltung der Zusatzbremseinrichtung wird als Messeinrichtung, mit der sich Schlingerbewegungen des Fahrzeuganhängers erkennen bzw. detektieren lassen, ein Drehratensensor und/oder Gierratensensor vorgeschlagen. Zusätzlich kann ein Beschleunigungssensor eingesetzt werden.

Von Vorteil ist, wenn der Drehratensensor möglichst nahe an der Anhängerkupplung, d. h. im Bereich der Auflaufeinrichtung, angeordnet ist. Denn dort sind die zu messenden Drehraten größer und damit leichter, empfindlicher und schneller zu erkennen, als weiter hinten am Fahrzeug, z. B. im Bereich der Fahrzeugachse.

Auch die Messeinrichtung ist vorzugsweise in dem Gehäuse der Zusatzbremseinrichtung untergebracht.

Weitere Einzelheiten und Vorteile ergeben sich aus der nachfolgenden Beschreibung eines Ausführungsbeispiels der Erfindung, wobei auf die Zeichnungen Bezug genommen wird. Darin zeigen:
- Fig. 1: eine vereinfachter Draufsicht das Fahrwerk eines auflaufgebremsten und mit einer Zusatzbremseinrichtung versehenen Fahrzeuganhängers, insbesondere eines Wohnanhängers;
- Fig. 2a: eine stark vergrößerte Seitenansicht der Zusatzbremseinrichtung entsprechend der in Fig. 1 eingetragenen Ansichtsebene II-II, und
- Fig. 2b: dieselbe Seitenansicht bei veränderter Bremssituation.

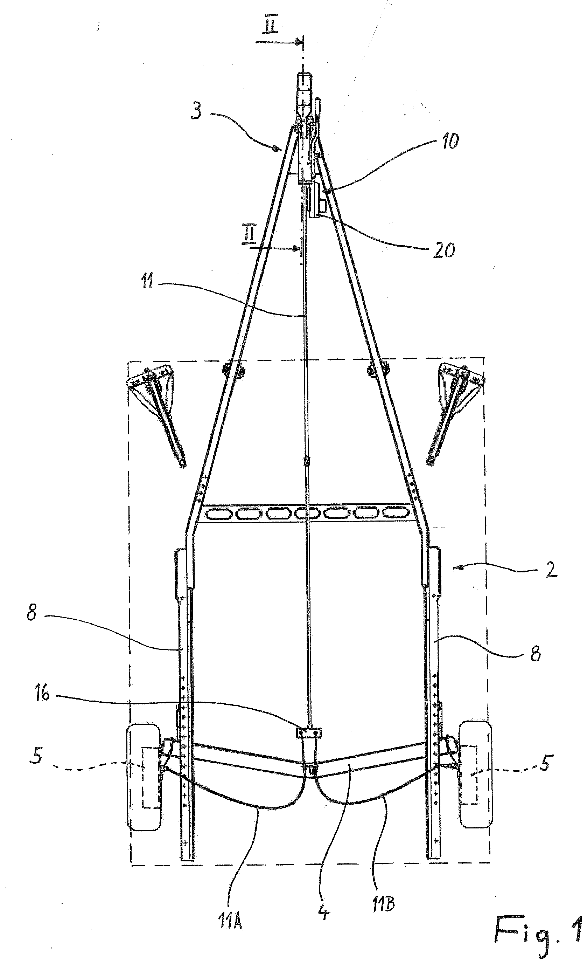

Die Erfindung betrifft eine sogenannte Schlingerbremse für einen Fahrzeuganhänger, z. B. für einen Wohnanhänger. Ein solcher Fahrzeuganhänger ist in Fig. 1 hinsichtlich seiner Fahrwerksbestandteile dargestellt. Er besteht aus einem Fahrgestell 2, welches eine frontseitige starre Deichsel 3 mit einer Anhängerkupplung, z. B. einer Kugelkopfkupplung, mindestens eine Fahrzeugachse 4 sowie eine Bremseinrichtung aufweist. Bestandteil des Fahrgestells 2 sind zwei Längsträger 8, die durch Querträger verbunden sind. Die Deichsel ist in der gezeigten Ausführungsform als nach vorne V-förmig zulaufende Deichsel 3 in Verlängerung der Längsträger 8 ausgebildet.

Die Bremseinrichtung des Fahrzeuganhängers besteht aus einer Betriebsbremse mit linker und rechter Fahrzeugbremse 5, einer Handbremseinrichtung sowie einer Zusatzbremseinrichtung 10. Die Betriebsbremse arbeitet als Auflaufbremse. Die Auflaufeinrichtung und auch der Handbremshebel sind in diesem Fall vorne im Bereich der Deichsel angeordnet. Die Fahrzeugbremsen 5 können jeweils mit einer Nachstelleinrichtung zur Kompensation des Bremsverschleißes versehen sein.

Die Bremskräfte der Betriebsbremse, der Handbremse und der Zusatzbremseinrichtung werden mittels eines Bremszugs 11 zu den Fahrzeugbremsen übertragen. Die Bremsübertragung kann mittels eines Bremsgestänges erfolgen, oder durch ein Bremsseil oder ein anderes, Zugkräfte übertragendes Element.

Der zentral angeordnete Bremszug 11 ist mit den zu den einzelnen Radbremsen 5 führenden Bremszügen 11A, 11B über ein Verbindungselement in Form eines Waagbalkens 16 verbunden. Dabei sind die zu den einzelnen Bremsen 5 führenden Bremszüge 11A, 11B als Bowdenzüge ausgebildet, deren Mäntel an einem geeigneten Widerlager an der Achse 4 eingehängt und abgestützt sind, wobei die Bremsseile ein Stück vorstehen und am Waagbalken 16 mit gegenseitiger Distanz befestigt sind, z. B. durch Einhängen in den Waagbalken 16. Der zentrale Bremszug 11 greift mittig am Waagbalken 16 an.

Die Zusatzbremseinrichtung 10 ist dazu ausgebildet, beim Auftreten von Schlingerbewegungen des Fahrzeuganhängers, die z. B. durch Fahrmanöver, durch Windkräfte oder dergleichen ausgelöst werden können, den Fahrzeuganhänger durch Betätigung der Radbremsen 5 wieder zu stabilisieren. Diese Funktion spricht automatisch an, d. h. auch dann, wenn der Fahrer passiv bleibt.

Die Zusatzbremseinrichtung 10 ist als eine kompakte und gegebenenfalls auch nachrüstbare Baueinheit ausgebildet. Sie verfügt über einen elektrischen Antrieb und ist relativ weit vorne im Bereich der Deichsel 3 angeordnet. Dort ist sie gut sichtbar und nicht durch den Fahrzeugaufbau verdeckt.

Für einen gegebenenfalls auch autarken Betrieb des elektrischen Antriebs kann der Fahrzeuganhänger mit einem bordeigenen Energiespeicher versehen sein, der auch in das Gehäuse der Schlingerbremse integriert sein kann, z. B. in Form einer Batterie oder eines Kondensators. Bei einer Stromunterbrechung wird dieser Energiespeicher innerhalb von Millisekunden zugeschaltet, so dass die Funktion der Schlingerbremse sichergestellt bleibt.

Jedoch lässt sich die Schlingerbremse auch ohne eine solche autarke Spannungsversorgung betreiben, wenn der Fahrzeuganhänger mit dem Zugfahrzeug elektrisch verbunden ist und daher von dem Zugfahrzeug stets die benötigte elektrische Energie erhält.

Die Zusatzbremseinrichtung 10 umfasst eine Messeinrichtung, eine Bremssteuerung mit entsprechender Steuerelektronik, und eine auf die Fahrzeugbremsen 5 wirkende Stellvorrichtung.

Die Messeinrichtung dient dem Erkennen und größenmäßigen Erfassen von Schlingerbewegungen des Fahrzeuganhängers. Sie ist dazu ausgebildet, zumindest Querbeschleunigungen des Fahrzeuganhängers nach beiden Seiten zu erfassen und von anderen im normalen Fahrbetrieb auftretenden Querbeschleunigungen sicher zu unterscheiden.

Zusätzlich kann die Sensorik ausgebildet sein, auch eine Gierrate des Fahrzeugs zu messen, d. h. Winkelgeschwindigkeiten um die Hochachse des Fahrzeuganhängers. Auch ein Erfassen der Drehrate, d. h. der Neigung des Fahrzeugs um seine Längsachse und ggf. auch um seine Querachse, ist mit der Sensorik möglich, und durch die elektronische Bremssteuerung auswertbar.

In dem hier beschriebenen Ausführungsbeispiel sind die Komponenten der Zusatzbremseinrichtung 10 einschließlich der Messeinrichtung, der elektronischen Bremssteuerung und der Stellvorrichtung zu einer integralen Baueinheit zusammengefasst, die in einem Gehäuse 20 untergebracht ist. Das Gehäuse 20 ist abgedichtet und ist zu seiner Befestigung an der Deichsel 3 mit einem Montageflansch 21 versehen. Der Montageflansch 21 kann mittels Schrauben 22 direkt an der Deichsel oder an einem starren Bestandteil der Deichsel befestigt sein.

Als Antrieb der Zusatzbremseinrichtung 10 befindet sich in dem Gehäuse 20 ein Elektromotor. Dessen Rotorachse erstreckt sich parallel zu der quer zu der Deichsel angeordneten Achse A eines Umlenkhebels 30, welcher Bestandteil der Auflaufeinrichtung ist.

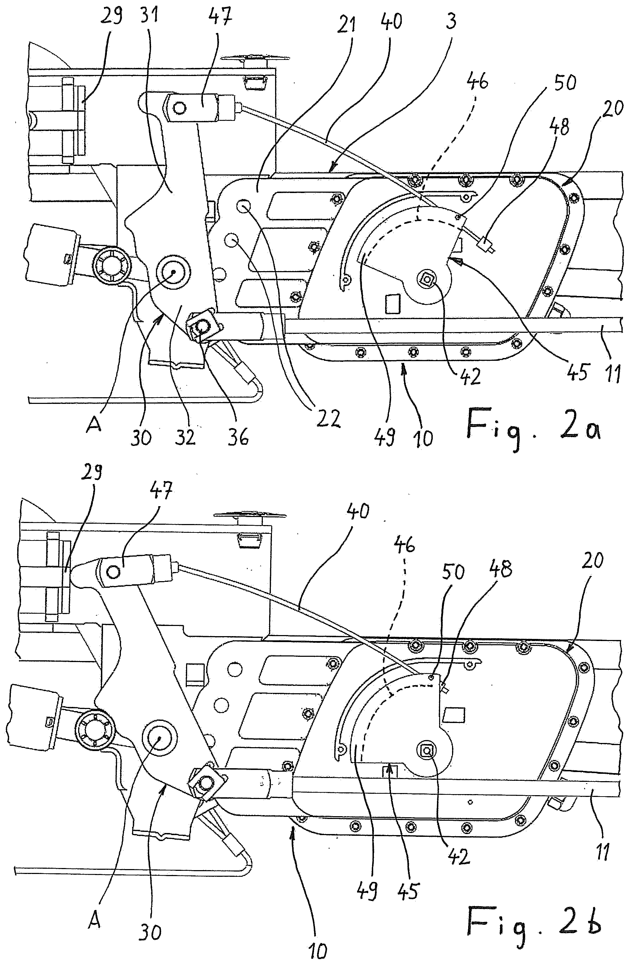

In an sich bekannter Bauart ist Bestandteil der Auflaufeinrichtung ein Auflaufelement 29, welches hier die Rückseite der das Anhängerfahrzeug mit dem Zugfahrzeug verbindenden Zugstange ist. Die Zugstange bzw. das Auflaufelement 29 ist in Längsrichtung an der Deichsel 3 gelagert. Bremst das Zugfahrzeug, so bewegt sich das Auflaufelement 29 relativ zu der Deichsel 3 rückwärts, wodurch das Auflaufelement 29 gegen den in Fig. 2a oberen Arm 31 des Umlenkhebels 30 stößt. Es kommt zu einem Verschwenken des Umlenkhebels im Uhrzeigersinn in Fig. 2a. Dadurch übt der andere, unter der Drehachse A angeordnete Arm 32 des Umlenkhebels 30 eine Zugkraft auf den zentralen Bremszug 11 aus, wozu der Bremszug 11 an einem Gelenkpunkt 36 mit dem Umlenkhebel 30 verbunden ist. Erfindungsgemäß ist nun vorgesehen, dass auch die Zusatzbremseinrichtung an dem Umlenkhebel 30 angreift, und nicht z. B. an dem Bremszug 11.

Die Ausgangswelle des Elektromotors führt als Drehwelle 42 teilweise aus dem Gehäuse 20 heraus, und ein Windenkörper 45 ist drehfest auf dem außerhalb des Gehäuses 20 angeordneten Abschnitt der Drehwelle 42 angeordnet. Dabei erstrecken sich die Motorwelle und somit auch die Drehwelle 42 parallel zu jener Achse A, auf der der Umlenkhebel 30 an der Deichsel 3 gelagert ist.

Zwischen der Ausgangswelle des Elektromotors und der Drehwelle 42 kann noch ein nichtselbsthemmendes Stirnradgetriebe angeordnet sein. Aber auch in diesem Fall ist die aus dem Gehäuse 20 herausführende Drehwelle 42 parallel zu der Achse A des Umlenkhebels 30 angeordnet.

Der Windenkörper 45 ist als eine um die Achse A drehbare Platte gestaltet und weist bei dem hier beschriebenen Ausführungsbeispiel eine Umfangskontur 46 auf, die sich teilkreisförmig um die Achse A erstreckt. Jedoch kann diese Umfangskontur 46 auch einen exzentrischen Verlauf bezüglich der Achse A der Drehwelle 42 aufweisen, um so eine spezielle Zugkraft-Charakteristik zu erzielen.

Längs der Umfangskontur 46 ist ein Zugelement 40 geführt, das an seinem anderen Ende mittels eines Gelenks 47 an dem Umlenkhebel 30 befestigt ist.

Das Zugelement 40 ist biegsam und ist an demselben Arm 31 des zweiarmigen Umlenkhebels 30 befestigt, gegen den von vorne her das Auflaufelement 29 arbeitet.

Als Zugelement 40 eignet sich im Prinzip ein einfaches Seil. Jedoch ist für eine saubere Führung des Zugelements auch dann, wenn dieses nicht unter Zug steht, der Einsatz eines elastisch biegsamen Stabs als Zugelement sinnvoll.

Das Zugelement 40 ist derart mit dem Windenkörper 45 verbunden, dass das Zugelement nur auf Zug an dem Windenkörper arretiert ist, hingegen in Gegenrichtung, also in Schubrichtung, frei beweglich gegenüber dem Windenkörper ist. Zu diesem Zweck kann das Zugelement 40 an diesem Ende mit einer Verdickung 48 in Gestalt einer aufgepressten Schelle 48 versehen sein, und der Windenkörper 45 mit einer z. B. durch einen Stift 50 erzielten Verengung, durch die die Verdickung 48 nicht hindurch passt. Der einseitige Freilauf des Zugelements 40 ist von Vorteil, damit das Zugelement bei Betätigung der Auflaufbremse oder der Handbremse, was beides ebenfalls zum Verschwenken des Umlenkhebels 30 führt, nicht durch Schub gestaucht wird und dabei eine Schlinge wirft.

Die Fign. 2a und 2b lassen erkennen, dass der Windenkörper 45 an seinem Umfang mit einer in Umfangsrichtung sich erstreckenden Rille 49 versehen ist. Die Rille 49 bildet dabei jene Umfangskontur 46, über die ein Längsabschnitt des biegsamen Zugelements 40 definiert und seitlich kontrolliert geführt ist.

Die beiden Arme 31, 32 des zweiarmigen Umlenkhebels 30 sind von unterschiedlicher Länge, wodurch ein Getriebeeffekt erzielt wird. Ist der Arm 31, an dem das Zugelement 40 zugkraftübertragend befestigt ist, von zweifacher bis dreifacher Länge des anderen Arms 32, erfolgt eine entsprechende Übersetzung der durch den Zug an dem Zugelement 40 ausgeübten Kraft auf die Kraft an dem Bremszug 11. Insofern realisiert der Umlenkhebel 30 zumindest einen Teil der Getriebecharakteristik, welche ansonsten in dem Antrieb zu realisieren wäre.

Da mit der Drehwelle 42 nur ein einziges und sich ausschließlich drehendes Element durch die Wand des Gehäuses 20 hindurchzuführen ist, zeichnet sich die Zusatzbremseinrichtung dadurch aus, dass sie im praktischen Einsatz, vor allem bei häufigen Fahrten in staubhaltiger und feuchter Umgebung, anspruchslos und zuverlässig arbeitet. Zwar ist eine Abdichtung sinnvoll, jedoch reicht hierfür bereits ein einfacher Dichtring zwischen der Drehwelle 42 und der Gehäuseöffnung aus.

Von Vorteil ist auch die Anordnung der Zusatzbremseinrichtung 10 vorne am Fahrzeuganhänger, d. h. im Bereich der V-förmigen Deichsel. Dort sind die mechanischen Komponenten der Zusatzbremseinrichtung für den Benutzer auf einfache Weise durch Sicht kontrollierbar. Es ist nicht erforderlich, die Unterseite des Anhängerfahrzeugs zu inspizieren.

### Bezugszeichenliste

- 2: Fahrgestell
- 3: Deichsel
- 4: Achse
- 5: Radbremse, Fahrzeugbremse
- 8: Längsträger
- 10: Zusatzbremseinrichtung
- 11: Bremszug
- 11A: Bremszug
- 11B: Bremszug
- 16: Waagbalken
- 20: Gehäuse
- 21: Montageflansch
- 22: Schraube
- 29: Auflaufelement
- 30: Umlenkhebel
- 31: Arm des Umlenkhebels
- 32: Arm des Umlenkhebels
- 36: Gelenkpunkt
- 40: Zugelement
- 42: Drehwelle
- 45: Windenkörper
- 46: Umfangskontur
- 47: Gelenk
- 48: Schelle, Verdickung
- 49: Rille
- 50: Stift
- A: Achse des Umlenkhebels

## Patentansprüche

1. Zusatzbremseinrichtung für einen auflaufgebremsten Fahrzeuganhänger, mit
- einem in der Deichsel (3) des Fahrzeuganhängers längsbeweglichen Auflaufelement (29),
- einem an der Deichsel (3) auf einer quer zu der Deichsel angeordneten Achse (A) gelagerten Umlenkhebel (30), an dem ein zu den Radbremsen (5) des Fahrzeuganhängers führender Bremszug (11) befestigt ist, und gegen den das Auflaufelement (29) arbeitet,
- einem in einem Gehäuse (20), welches an der Deichsel (3) befestigt ist, angeordneten Antrieb, dessen Abtriebselement mit dem Umlenkhebel (30) verbunden ist, wobei das Abtriebselement des Antriebs eine Drehwelle (42) ist, die sich parallel zu der Achse (A) des Umlenkhebels (30) erstreckt,
**dadurch gekennzeichnet, dass** auf der Drehwelle (42) außerhalb des Gehäuses (20) ein fest mit der Drehwelle (42) verbundener Windenkörper (45) angeordnet ist, auf dessen Umfangskontur (46) ein biegsames Zugelement (40) geführt ist, dessen anderes Ende an dem Umlenkhebel (30) befestigt ist.

2. Zusatzbremseinrichtung nach Anspruch 1, **dadurch gekennzeichnet, dass** der Umlenkhebel (30) zweiarmig (30, 31) ausgebildet ist, und das Zugelement (40) an demselben Arm (31) befestigt ist, gegen den das Auflaufelement (29) arbeitet.

3. Zusatzbremseinrichtung nach Anspruch 2, **dadurch gekennzeichnet, dass** die beiden Arme (31, 32) von unterschiedlicher Länge sind, wobei der Abstand zwischen der Achse (A) und der Befestigung des Zugelements (40) größer und vorzugsweise das Zwei- bis Dreifache des Abstands zwischen der Achse (A) und der Befestigung des Bremszugs (11) ist.

4. Zusatzbremseinrichtung nach einem der vorangehenden Ansprüche, **dadurch gekennzeichnet, dass** das Gehäuse (20) zum Hindurchführen der Drehwelle (42) mit einer Gehäuseöffnung versehen ist, wobei mindestens ein Dichtring zwischen der Drehwelle (42) und der Gehäuseöffnung angeordnet ist.

5. Zusatzbremseinrichtung nach einem der vorangehenden Ansprüche, **gekennzeichnet durch** einen elastisch biegsamen Stab als Zugelement (40).

6. Zusatzbremseinrichtung nach einem der vorangehenden Ansprüche, **dadurch gekennzeichnet, dass** das Zugelement (40) derart mit dem Windenkörper (45) verbunden ist, dass es in Zugrichtung an dem Windenkörper (45) arrestiert ist, hingegen in Gegenrichtung frei beweglich gegenüber dem Windenkörper (45) ist.

7. Zusatzbremseinrichtung nach Anspruch 6, **dadurch gekennzeichnet, dass** das Zugelement (40) an seinem dem Windenkörper (45) zugeordneten Ende mit einer Verdickung (48) versehen ist, und dass der Windenkörper (45) auf seinem Umfang mit einer Verengung versehen ist, durch die zwar das Zugelement (40) hindurch passt, nicht jedoch dessen Verdickung (48).

8. Zusatzbremseinrichtung nach einem der vorangehenden Ansprüche, **dadurch gekennzeichnet, dass** das andere Ende des Zugelements (40) mittels eines Gelenks (47) an dem Umlenkhebel (30) befestigt ist.

9. Zusatzbremseinrichtung nach einem der vorangehenden Ansprüche, **dadurch gekennzeichnet, dass** die Umfangskontur (46) des Windenkörpers (45), bezogen auf die Achse der Drehwelle (42), einen exzentrischen Verlauf aufweist.

10. Zusatzbremseinrichtung nach einem der vorangehenden Ansprüche, **dadurch gekennzeichnet, dass** der Windenkörper (45) mit einer in Umfangsrichtung verlaufenden Rille (49) versehen ist, und die Rille (49) die Umfangskontur (46) bildet, über die das Zugelement (40) geführt ist.

11. Zusatzbremseinrichtung nach einem der vorangehenden Ansprüche, **dadurch gekennzeichnet, dass** das Gehäuse (20) zu seiner Befestigung an der Deichsel mit einem Montageflansch (21) versehen ist.

## Claims

1. Additional brake device for an overrun-braked vehicle trailer, having
- a run-on element (29) which can be moved longitudinally in the drawbar (3) of the vehicle trailer,
- a deflection lever (30) which is mounted on the drawbar (3) on an axis (A) which is arranged transversely with respect to the drawbar, to which deflection lever (30) a brake cable (11) which leads to the wheel brakes (5) of the vehicle trailer is fastened, and against which the run-on element (29) operates,
- a drive which is arranged in a housing (20) which is fastened to the drawbar (3), the output element of which drive is connected to the deflection lever (30), the output element of the drive being a rotary shaft (42) which extends parallel to the axis (A) of the deflection lever (30),
**characterized in that** a winch body (45) which is connected fixedly to the rotary shaft (42) is arranged on the rotary shaft (42) outside the housing (20), on the circumferential contour (46) of which winch body (45) a flexible traction element (40) is guided, the other end of which is fastened to the deflection lever (30).

2. Additional brake device according to Claim 1, **characterized in that** the deflection lever (30) is configured with two arms (30, 31), and the traction element (40) is fastened to the same arm (31), against which the run-on element (29) operates.

3. Additional brake device according to Claim 2, **characterized in that** the two arms (31, 32) are of different length, the spacing between the axis (A) and the fastening of the traction element (40) being greater than, and preferably from two times to three times, the spacing between the axis (A) and the fastening of the brake cable (11).

4. Additional brake device according to one of the preceding claims, **characterized in that** the housing (20) is provided with a housing opening for guiding through the rotary shaft (42), at least one sealing ring being arranged between the rotary shaft (42) and the housing opening.

5. Additional brake device according to one of the preceding claims, **characterized by** an elastically flexible rod as traction element (40).

6. Additional brake device according to one of the preceding claims, **characterized in that** the traction element (40) is connected to the winch body (45) in such a way that it is locked on the winch body (45) in the pulling direction, but can be moved freely with respect to the winch body (45) in the opposite direction.

7. Additional brake device according to Claim 6, **characterized in that** the traction element (40) is provided with a thickened portion (48) at its end which is assigned to the winch body (45), and **in that** the winch body (45) is provided on its circumference with a constriction, through which the traction element (40) fits, but not its thickened portion (48).

8. Additional brake device according to one of the preceding claims, **characterized in that** the other end of the traction element (40) is fastened to the deflection lever (30) by means of a joint (47).

9. Additional brake device according to one of the preceding claims, **characterized in that** the circumferential contour (46) of the winch body (45) has an eccentric course, in relation to the axis of the rotary shaft (42).

10. Additional brake device according to one of the preceding claims, **characterized in that** the winch body (45) is provided with a groove (49) which runs in the circumferential direction, and the groove (49) forms the circumferential contour (46), via which the traction element (40) is guided.

11. Additional brake device according to one of the preceding claims, **characterized in that**, in order to fasten it to the drawbar, the housing (20) is provided with a mounting flange (21).

## Revendications

1. Dispositif de frein additionnel pour une remorque de véhicule à freinage par inertie, avec
- un élément d'inertie (29) mobile longitudinalement dans l'attelage (3) de la remorque de véhicule,
- un levier de déviation (30) monté sur l'attelage (3) sur un axe (A) disposé transversalement à l'attelage, auquel est fixé un tirant de frein (11) conduisant aux freins de roue de la remorque de véhicule, et contre lequel l'élément d'inertie (29) agit,
- un entraînement disposé dans un boîtier (20), qui est fixé à l'attelage (3), dont l'élément de sortie est relié au levier de déviation (30), dans lequel l'élément de sortie de l'entraînement est un arbre rotatif (42), qui s'étend parallèlement à l'axe (A) du levier de déviation (30),
**caractérisé en ce qu'**un corps de treuil (45) calé en rotation sur l'arbre rotatif (42) est disposé sur l'arbre rotatif (42) à l'extérieur du boîtier (20), sur le contour périphérique (46) duquel est guidé un élément de traction flexible (40), dont l'autre extrémité est fixée au levier de déviation (30).

2. Dispositif de frein additionnel selon la revendication 1, **caractérisé en ce que** le levier de déviation (30) est réalisé à deux bras (30, 31), et l'élément de traction (40) est fixé au même bras (31) contre lequel l'élément d'inertie (29) agit.

3. Dispositif de frein additionnel selon la revendication 2, **caractérisé en ce que** les deux bras (31, 32) sont de longueur différente, dans lequel la distance entre l'axe (A) et la fixation de l'élément de traction (40) est plus grande et de préférence vaut deux à trois fois la distance entre l'axe (A) et la fixation du tirant de frein (11).

4. Dispositif de frein additionnel selon l'une quelconque des revendications précédentes, **caractérisé en ce que** le boîtier (20) est doté d'une ouverture de boîtier pour le passage de l'arbre rotatif (42), dans lequel au moins un anneau d'étanchéité est disposé entre l'arbre rotatif (42) et l'ouverture de boîtier.

5. Dispositif de frein additionnel selon l'une quelconque des revendications précédentes, **caractérisé par** une barre élastiquement flexible comme élément de traction (40).

6. Dispositif de frein additionnel selon l'une quelconque des revendications précédentes, **caractérisé en ce que** l'élément de traction (40) est relié au corps de treuil (45), de telle manière qu'il soit calé sur le corps de treuil (45) dans la direction de traction, et qu'il soit au contraire librement mobile par rapport au corps de treuil (45) dans la direction opposée.

7. Dispositif de frein additionnel selon la revendication 6, **caractérisé en ce que** l'élément de traction (40) est pourvu d'une surépaisseur (48) à son extrémité associée au corps de treuil (45) et **en ce que** le corps de treuil (45) est pourvu à sa périphérie d'un rétrécissement, à travers lequel l'élément de traction (40) peut certes passer, mais pas sa surépaisseur (48).

8. Dispositif de frein additionnel selon l'une quelconque des revendications précédentes, **caractérisé en ce que** l'autre extrémité de l'élément de traction (40) est fixée au levier de déviation (30) au moyen d'une articulation (47).

9. Dispositif de frein additionnel selon l'une quelconque des revendications précédentes, **caractérisé en ce que** le contour périphérique (46) du corps de treuil (45) présente un tracé excentrique par rapport à l'axe (A) de l'arbre rotatif (42).

10. Dispositif de frein additionnel selon l'une quelconque des revendications précédentes, **caractérisé en ce que** le corps de treuil (45) est doté d'une rainure (49) s'étendant en direction périphérique, et la rainure (49) forme le contour extérieur (46) par lequel l'élément de traction (40) est guidé.

11. Dispositif de frein additionnel selon l'une quelconque des revendications précédentes, **caractérisé en ce que** le boîtier (20) est doté d'une bride de montage (21) pour sa fixation à l'attelage.
